# EUROPÄISCHE PATENTSCHRIFT

(11) **EP 0 670 212 B1**
(45) Veröffentlichungstag und Bekanntmachung des Hinweises auf die Patenterteilung: **28.07.1999**
(21) Anmeldenummer: 95102476.9
(22) Anmeldetag: 22.02.1995
(51) Int. Cl.: B29C 47/90

(54) **Einrichtung zur Kalibrierung des Aussendurchmessers eines kontinuierlich extrudierten Rohres**
Apparatus for calibrating external diameter of extruded pipes
Dispositif de calibrage du diamètre extérieur des tuyaux extrudés

(30) Priorität: 05.03.1994 DE 4408064
(43) Veröffentlichungstag der Anmeldung: 06.09.1995
(73) Patentinhaber: Lüers, Heinrich, D-49424 Goldenstedt (DE); Lüers, Gregor, D-49424 Goldenstedt (DE)
(72) Erfinder: Lüers, Gregor, D-49424 Goldenstedt (DE)
(74) Vertreter: Meyer, Ludgerus A., Dipl.-Ing.

(56) Entgegenhaltungen:
- EP-A- 0 558 020
- DE-A- 2 612 197
- DE-A- 3 412 619
- DE-A- 3 521 321
- GB-A- 1 542 628

## Beschreibung

Die Erfindung betrifft eine Einrichtung zur Kalibrierung des Außendurchmessers eines kontinuierlich extrudierten Rohres nach dem Oberbegriff des Anspruchs 1.

Eine Einrichtung dieser Art ist z. B. aus der GB-A-1 542 628 zu entnehmen.

Zur Herstellung maßgenauer Außenkonturen extrudierter Rohre werden diese in der Regel durch gekühlte Kalibrierhülsen gezogen. Das Extrudat muß dabei an die Innenwand der Kalibrierhülse gepreßt werden, entweder durch Druckluft im Inneren des Rohres oder durch den atmosphärischen Druck, wenn zwischen Extrudat und Kalibrierhülse ein Vakuum erzeugt wird.

Durch eine derartige Kalibriereinrichtung wird der nach Austritt des Extrudats aus dem Extruder auftretende Quelleffekt vermieden, der auf das Freisetzen von gespeicherter potentieller Energie zurückzuführen ist, die während des Durchströmens des viskoelastischen Polymers im Extruder auftritt. Durch eine Differenz in den Geschwindigkeiten zwischen Abzug und Austritt des Extrudats kann auch eine Querschnittsverminderung eines Rohres auftreten. Die Kalibrierhülse dient dazu, das zu erzeugende Profil innerhalb der geforderten Toleranzgrenzen herzustellen, die für Rohre aus bestimmten Kunststoffen genormt sind. Ist der Außendurchmesser z. B. 110 mm, beträgt die Toleranz + 0,3 mm bis 0,0 mm. Diese Maße müssen unter Berücksichtigung unterschiedlicher Faktoren, die den Durchmesser bei der Herstellung und bei der Lagerung verändern können, eingehalten werden. Hierbei sind die verschiedenen Kunststoffarten, wie z. B. PVC, PP, PE, ABS, usw. mit ihrem unterschiedlichen Schrumpfverhalten zu berücksichtigen. Als weiterer Faktor ist die Wanddicke des Kunststoffrohres sowie die Extrusionsgeschwindigkeit zu berücksichtigen. Ebenfalls hat die Wassertemperatur und das erreichte Vakuum in der Kühlkammer Einfluß auf den Durchmesser des Rohres. Alle diese Faktoren sind durch geeignete Bemessung der Kalibrierhülse zu berücksichtigen.

Häufig wird die Kalibrierhülse in scheibenartige Abschnitte aufgeteilt, zwischen denen das Extrudat in einer Einrichtung zur Vakuum-Sprüh-Kalibrierung mit Wasser besprüht wird.

In der Praxis hat es sich gezeigt, daß für unterschiedliche Verfahrensparameter und Materialien Kalibrierhülsen mit verschiedenem Durchmesser verwendet werden müssen, um normgerechte Toleranzen zu erreichen. Für den gleichen Normdurchmesser sind daher in der Regel eine Reihe von Kalibrierhülsen mit unterschiedlichem Über- oder Untermaß bereit zu halten. Dabei ist auch zu berücksichtigen, daß Kalibrierhülsen einem Verschleiß unterliegen.

Die aus der GB 15 42 628 bekannte Einrichtung enthält eine schraubenförmig gewickelte Kalibrierhülse, deren endseitige Windungen gegeneinander verdrehbar sind, so daß eine einstellbare Durchmesseränderung eines aus einem Extruder austretenden Schlauches erreichbar ist. Die Windungen der Kalibrierhülse sind bei dieser Ausführungsform im Querschnitt scheiben- oder ringförmig ausgebildet, so daß sie im gewickelten Zustand zwar eine Hülse bilden, diese jedoch keine glatte Innenoberfläche aufweist. Die Folge ist, daß der hindurchgeführte Schlauch Stauungen erfährt, die seine Qualität beeinträchtigen. Ferner kann eine axiale Verschiebung der Hülse in Folge des hohen auftretenden Druckes entstehen, welcher ebenfalls zu Umformungen des Schlauches führt und damit, insbesondere bei empfindlichen Kunststoffmaterialien, Qualitätseinbußen verursacht.

Aus der DE 34 12 619 A1 ist eine ähnliche Einrichtung zum Kalibrieren von Rohren oder Profilen aus thermoplastischen Kunststoffen bekannt geworden, die ebenfalls eine spiralig gewickelte Kalibrierhülse verwendet, wobei der Abstand der einzelnen Windungen zueinander so groß ist, daß sich insbesondere bei Einsatz in einer Vakuumkühlkammer unzulässige Verformungen des hindurchgeführten Schlauches und seitliche Verschiebungen der Hülse ergeben. Zur automatischen Einhaltung eines konstanten Durchmessers des Rohres ist angegeben, die Feststelleinrichtung der Kalibriervorrichtung mit einer Prozeßsteuerung zu verbinden. Die grundsätzlichen Probleme dieser Einrichtung werden jedoch nicht behoben.

Schließlich zeigt auch die DE-AS 26 16 197 eine Kalibriervorrichtung mit spiralig gewickelter Kalibrierhülse mit den gleichen Nachteilen, wie die beiden erstgenannten Veröffentlichungen.

Der Erfindung liegt die Aufgabe zugrunde, eine Einrichtung zur Kalibrierung des Außendurchmessers eines kontinuierlich extrudierten Rohres mit einer Kalibrierhülse anzugeben, die eine verbesserte Führung des extrudierten Rohres gewährleistet.

Diese Aufgabe wird durch die im Anspruch 1 angegebene Erfindung gelöst. Vorteilhafte Weiterbildungen der Erfindung sind in Unteransprüchen angegeben.

Dadurch, daß die Kalibrierhülse als im Querschnitt rechteckförmiges Band ausgebildet ist, ist die Kalibrierhülse auf ihrer Innenoberfläche im wesentlichen geradzylindrisch ausgebildet, wobei lediglich die Zylinderform durch die Abstände der Windungen unterbrochen ist. Sofern die Abstände genügend klein gehalten bleiben, ergibt sich damit eine im wesentlichen gleichmäßige Innenoberfläche der Kalibrierhülse, wie sie bei üblichen nicht variablen Kalibrierhülsen des Standes der Technik gegeben ist. Der Einsatz der Erfindung verschlechtert damit nicht die Eigenschaften der auf diese Weise hergestellten Rohre.

Durch die Anordnung seitlicher Stützschienen ist ein seitliches Ausweichen der Kalibrierhülse verhindert. Damit wird einerseits die Geradlinigkeit der Kalibrierhülse wesentlich verbessert und andererseits kann die Materialdicke des Bandes sehr klein gehalten werden, so daß auch bei hohen Drücken kein Ausbrechen von Windungen der Kalibrierhülse möglich ist und ferner eine große Verstellmöglichkeit im Durchmesser der Kalibrierhülse gegeben ist. Die in Unteransprüchen angegebene besondere Ausgestaltung der Stützschienen erlaubt ein Verstellen des Durchmessers der Kalibrierhülse im weiten Umfang.

Da für einen Normdurchmesser eines Rohres nur wenige Millimeter Durchmesseränderungen erforderlich sind, um alle den Rohrdurchmesser beeinflussenden Parameter auszugleichen, ist es durch die Erfindung möglich, für jeden Normdurchmesser lediglich eine einzige Kalibrierhülse vorrätig zu halten. Eng beieinander liegende Normstufen können auch durch Verwendung einer einzigen Kalibrierhülse zugleich abgedeckt werden. Die Durchmesseränderung der erfindungsgemäßen Kalibrierhülse kann während des Betriebes durchgeführt werden, so daß sich eine unmittelbare Ergebniskorrektur erzielen läßt, ohne daß größerer Ausschuß produziert wird.

Die erfindungsgemäße Kalibrierhülse ist vorzugsweise so aufgebaut, daß ihre erste endseitige Windung stationär befestigt ist und ihre zweite endseitige Windung am anderen Ende der Kalibrierhülse parallel zur ersten endseitigen Windung verdrehbar angeordnet ist. Insbesondere ist ein Befestigungsflansch vorgesehen, der fest am vorderen Ende der Kühlkammer angeordnet ist. Von dem Befestigungsflansch führen mehrere Stützrohre zu einem Nutflansch, in dem das stationäre erste Ende der Kalibrierhülse fest verankert ist. Das drehbare Ende der Kalibrierhülse ist im Befestigungsflansch aufgenommen und diesem gegenüber mittels eines Schneckenradantriebs verdrehbar gelagert.

Eine derartige Ausbildung der Kalibrierhülse erlaubt es, die Verdrehung der Kalibrierhülse an der Vorderseite des Befestigungsflansches vorzunehmen, so daß eine Durchmesseränderung der Kalibrierhülse während des Betriebes der Einrichtung möglich ist. Diese Ausbildung weist auch den Vorteil auf, daß die gesamte Kalibriereinrichtung ausschließlich über den Befestigungsflansch in der Kühlkammer angeordnet ist, so daß ein Austausch der Einrichtung besonders einfach gestaltet ist.

In einer alternativen Ausführungsform ist es auch möglich, die endseitigen Windungen der Kalibrierhülse nicht gegeneinander zu verdrehen, sondern im gegenseitigen Abstand zu verändern, wobei beispielsweise durch Schraubverbindungen zwischen Befestigungsflansch und Nutflansch der Abstand einstellbar ist.

Die im wesentlichen zur Vermeidung eines Ausbrechens der einzelnen Windungen der Kalibrierhülse vorgesehenen Stützschienen auf der Außenseite der Kalibrierhülse ermöglichen eine Umfangsverschiebung der Windungen, verhindern jedoch radiale Verschiebungen. Die Stützschienen sind vorzugsweise über Schraubverbindungen mit den einzelnen Windungen des Bandes der Kalibrierhülse verschraubt.

Von Vorteil ist, wenn die einzelnen Windungen der Kalibrierhülse einen Abstand zueinander aufweisen, um das Eintreten von Kühlflüssigkeit zwischen die Windungen zu ermöglichen.

Die Änderung des Durchmessers der Kalibrierhülse kann durch manuelle Betätigung einer Schneckenwelle erreicht werden, diese kann jedoch auch motorisch angetrieben werden, wobei in einer besonderen Ausgestaltung der Erfindung vorgesehen ist, daß durch eine selbsttätige Erfassung des erzeugten Durchmessers des Rohres eine Regeleinrichtung die Durchmesserverstellung vornimmt.

Die erfindungsgemäße Kalibrierhülse weist den besonderen Vorteil auf, daß damit Kunststoffrohre produziert werden können, deren Außendurchmesser im Betrieb auf das Sollmaß eingestellt werden kann. Der Durchmesser kann während des Betriebes jederzeit verändert werden, z. B. nach der Inbetriebnahme der Einrichtung, wenn ein anderes Extrudat verwendet wird, wenn andere Schrumpfwerte zu erwarten sind, wenn andere Wanddicken oder Extrusionsgeschwindigkeiten gefahren werden, wenn die Wassertemperatur sich ändert oder die Kalibrierhülse Verschleißerscheinungen zeigt. Die Standzeit einer derartigen Kalibrierhülse ist damit gegenüber bisher verwendeten Kalibrierhülsen wesentlich verlängert.

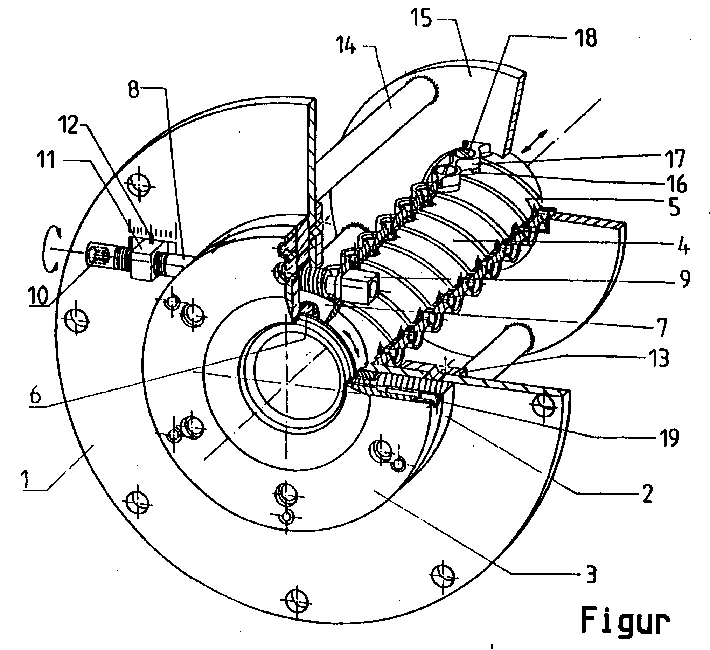

Die Erfindung wird nachstehend anhand eines Ausführungsbeispiels näher erläutert. Die einzige Figur zeigt eine erfindungsgemäße Kalibriereinrichtung in perspektivischer teilgeschnittener Ansicht.

Die dargestellte Kalibriereinrichtung ist mit ihrem Befestigungsflansch 1 an der Eingangsseite einer Vakuumkammer angeschraubt. Die Kalibrierhülse 4 befindet sich dabei in der Vakuumkammer. Außerhalb der Kammer befindet sich der Rohreinlauf 3 mit der Feststelleinrichtung zur Durchmesseränderung, und ist dem Extruder bzw. dem Rohrkopf mit einem Abstand von etwa 50 - 70 mm zugewandt.

Auf der Rückseite des Befestigungsflansches 1 ist ein Stützflansch 13 angeordnet, an dem mehrere, insbesondere vier, axial gerichtete Stützrohre 14 befestigt sind, an deren hinterem Ende parallel zum Befestigungsflansch 1 ein Nutflansch 15 angeschweißt ist. Befestigungsflansch 1, Stützrohre 14 und Nutflansch 15 bilden damit eine starre Einheit. Die Kalibrierhülse 4 ist in Form eines spiralig gewickelten Bandes in Form eines zweigängigen Gewindes mit großer Steigung ausgebildet. Zwischen den einzelnen Windungen ist ein Spalt vorgesehen, durch den Vakuum und Kühlwasser auf das durch die Kalibrierhülse gezogene Extrudat einwirken können. Das Band der Kalibrierhülse ist insbesondere als im Querschnitt rechteckförmiges Band aus Bronze oder Messung gebildet. Das hintere Ende, d.h. die letzte Windung, der Kalibrierhülse 4 ist in dem Nutflansch 15 fest verankert. Das vorderseitige Ende der Kalibrierhülse weist einen Bund auf, um ein Verschieben der Kalibrierhülse 4 in Längsrichtung zu verhindern. Der Bund ist in einem mit dem Befestigungsflansch 1 verbundenen Gehäuse 2 drehbar gelagert. Das Gehäuse 2 weist ferner eine ringförmige Aussparung auf, in der ein mit dem vorderen Ende der Kalibrierhülse 4 verbundenes Schneckenrad 7 drehbar angeordnet ist. Das Schneckenrad 7 ist mit zwei Keilen 6 auf der Kalibrierhülse befestigt. In das Schneckenrad 7 greift die Schneckenwelle 8 ein, die an einem Ende in einer Schneckenbuchse 9 gelagert ist, die an dem Befestigungsflansch 1 befestigt ist. Das andere Ende der Schneckenwelle 8 ist in einem Verstellbegrenzer 11 gelagert, der in einer Aussparung des Flansches 1 verschieblich aufgenommen ist. Der Verstellbegrenzer 11 weist ferner eine Verstellanzeige 12 auf, die an dem Befestigungsflansch 1 eine Einstellanzeige ermöglicht. Der Verstellbegrenzer 11 wird bei Verstellung der Schneckenwelle 8 mit Hilfe eines Innensechskants 10 innerhalb der Aussparung des Flansches 1 verschoben. Bei Erreichen des Anschlages ist ein weiteres Drehen der Schneckenwelle nicht möglich.

An die Vorderseite des Befestigungsflansches 1 schließt ein Wasserring 3 das Gehäuse 2 ab. Der Wasserring 3 weist Wasseranschlüsse 19 für eine Wasserzufuhr auf, durch die Wasser an den Kunststoffrohreinlauf herangeführt werden kann. Dadurch erhält die Kunststoffrohroberfläche einen Gleitfilm.

Zur seitlichen Stabilisierung der Kalibrierhülse 4 sind vier Führungsschienen 17 vorgesehen, die mittels Schrauben 18 und Distanzscheiben 16 an jeder Windung mit der Kalibrierhülse in den Gewinden 5 verschraubt sind. Die Führungsschienen 17 weisen jeweils zwischen zwei Befestigungsstellen in Umfangsrichtung einen erheblich geringeren Querschnitt als in Radialrichtung auf, so daß eine gewisse Flexibilität der Führungsschienen 17 in Umfangsrichtung verbleibt, aber eine Verschiebung der Kalibrierhülse 4 in Radialrichtung verhindert wird. Am rückwärtigen Ende der Kalibrierhülse 4 sind die Führungsschienen 17 in der Nutflansch 15 drehbar und in Längsrichtung verschiebbar gelagert.

Während des Betriebs der Kalibrierhülse 4 tritt das Extrudat aus dem Rohrkopf aus und wird von einem Raupenabzug durch die Kalibrierhülse 4 und die Vakuumkammer gezogen. Durch das über den Wasserring 3 zugeführte Wasser wird ein Gleitfilm auf die Kunststoffrohroberfläche aufgebracht. In der anschließenden Vakuumkammer wird die Kalibrierhülse 4 und durch dessen umlaufende Schlitze das Kunststoffrohr kontinuierlich mit Wasser besprüht. Dadurch kühlt das Rohr langsam ab. Durch das Vakuum bzw. den Unterdruck, der sich in der Vakuumkammer befindet, entsteht von der Innenseite des Kunststoffrohres ein Druck nach Außen, der das Kunststoffrohr an die Innenwand der Hülse drückt und damit den Außendurchmesser definiert.

Zur Durchmesseränderung des Kunststoffrohres wird die Kalibrierhülse 4 mit Hilfe der Schneckenwelle 8 und des Schneckenrades 7 am vorderen Ende verdreht. Die starre Ausbildung der aus Befestigungsflansch 1, Stützflansch 13, Stützrohre 14 und Nutflansch 15 gebildete Einheit verhindert ein Mitdrehen des rückwärtigen Endes der Kalibrierhülse 4. Bei einer Verschiebung der Schneckenwelle 8 nach rechts vergrößert sich der Durchmesser der Kalibrierhüse 4, während bei einer Verschiebung nach links sich der Durchmesser verkleinert. Entsprechend wird der Durchmesser des erzeugten Kunststoffrohres verändert. Eine selbsttätige Verstellung der Kalibrierhülse aufgrund ihrer Eigenspannung wird durch Selbsthemmung der Paarung Schneckenrad/Schneckenwelle verhindert.

Wenn der Durchmesser des erzeugten Rohres mit Hilfe von Sensoren, beispielsweise Ultraschallsensoren, selbsttätig erfaßt wird, kann das erfaßte Sensorsignal auf eine Regeleinrichtung geführt werden, die bei Abweichung vom Sollwert eine elektromotorische Verstellung der Schneckenwelle 8 ermöglicht, so daß eine ständige selbsttätige Durchmesserregelung erzielt werden kann.

### Bezugszeichenliste

- 1: Befestigungsflansch
- 2: Gehäuse
- 3: Wasserring
- 4: Kalibrierhülse
- 5: Gewinde
- 6: Keile
- 7: Schneckenrad
- 8: Schneckenwelle
- 9: Schneckenbuchse
- 10: Innensechskant
- 11: Verstellbegrenzer
- 12: Verstellanzeige
- 13: Stützflansch
- 14: Stützrohre
- 15: Nutflansch
- 16: Distanzscheibe
- 17: Führungsschiene
- 18: Schrauben
- 19: Wasseranschluß

## Patentansprüche

1. Einrichtung zur Kalibrierung des Außendurchmessers eines kontinuierlich extrudierten Rohres, mit einer zwischen einem Befestigungsflansch (1) und einem Nutflansch (15) angeordneten spiralförmig gewickelten Kalibrierhülse (4), die insbesondere im Einlaufbereich einer Kühlvorrichtung angeordnet ist, und deren endseitige Windungen in Umfangsrichtung gegeneinander verdrehbar sind, dadurch gekennzeichnet, daß die Windungen der Kalibrierhülse (4) als im Querschnitt rechteckförmiges Band ausgebildet sind, und daß die Windungen des Bandes durch wenigstens eine parallel zur Kalibrierhülse (4) angeordnete Stützschiene (17) gegen seitliches Ausweichen gesichert ist.

2. Einrichtung nach Anspruch 1, dadurch gekennzeichnet, daß der Abstand der endseitigen Windungen zueinander einstellbar ist.

3. Einrichtung nach Anspruch 1, dadurch gekennzeichnet, daß die erste endseitige Windung des Bandes im Nutflansch (15) verdrehfest gelagert ist und daß die zweite endseitige Windung des Bandes mit einem Schneckenrad (7) verbunden ist, in das eine an dem Befestigungsflansch (1) gelagerte Schneckenwelle (8) zur Verdrehung der zweiten endseitigen Windung gegenüber dem Befestigungsflansch (1) eingreift.

4. Einrichtung nach Anspruch 1, dadurch gekennzeichnet, daß auf dem Umfang der Kalibrierhülse (4) vier Stützschienen (17) verteilt angeordnet sind.

5. Einrichtung nach Anspruch 1 oder 4, dadurch gekennzeichnet, daß die Stützschienen (17) in Umfangsrichtung des Kalibrierrohres (4) flexibel ausgebildet sind.

6. Einrichtung nach Anspruch 1, 4 oder 5, dadurch gekennzeichnet, daß die Stützschienen (17) über Schraubverbindungen (18) mit den einzelnen Windungen der Kalibrierhülse (4) verschraubt sind.

7. Einrichtung nach einem oder mehreren der vorhergehenden Ansprüche, dadurch gekennzeichnet, daß die einzelnen Windungen der Kalibrierhülse (4) im entspannten Zustand einen Abstand zueinander aufweisen.

8. Einrichtung nach Anspruch 3, dadurch gekennzeichnet, daß die zweite endseitige Windung der Kalibrierhülse (4) gegenüber dem Befestigungsflansch (1) axial gesichert ist.

9. Einrichtung nach Anspruch 3, dadurch gekennzeichnet, daß die Schneckenwelle (8) motorisch antreibbar ist.

10. Einrichtung nach Anspruch 9, dadurch gekennzeichnet, daß der Antrieb in Abhänigkeit von einem mittels Sensor am fertiggestellten Rohr erfaßten Durchmessersignal regelbar ist.

## Claims

1. Apparatus for calibrating the outside diameter of a continuously extruded pipe with a spirally wound calibration sleeve (4) arranged between an attachment flange (1) and a slot flange (15), which is arranged in particular in the in zone of a cooling device, and whose terminal coils can be rotated against each other in peripheral direction, characterized in that the coils of the calibration sleeve (4) are developed as a band having in a rectangular in cross-section, and in the coils of the band are secured against lateral displacement by at least one support rail (17) arranged parallel to the calibration sleeve (4).

2. Apparatus according to claim 1, characterized in that the distance between the terminal coils is adjustable.

3. Apparatus according to claim 1, characterized in that the first terminal coil of the band is housed secure against rotation in the slot flange (15) and in that in the second terminal coil of the band is connected to a worm wheel (7) in which a worm shaft (8) housed on the attachment flange (1) engages in order to rotate the second terminal coil vis-à-vis the attachment flange (1).

4. Apparatus according to claim 1, characterized in that four support rails (17) are arranged distributed over the periphery of the calibration sleeve (4).

5. Apparatus according to claim 1 or 4, characterized in that the support rails (17) are flexible in the peripheral direction of the calibration pipe (4).

6. Apparatus according to claim 1, 4 or 5, characterized in that the support rails (17) are screwed via screw connections (18) to the individual coils of the calibration sleeve (4).

7. Apparatus according to one or more of the previous claims, characterized in that the individual coils of the calibration sleeve (4) are at a distance from each other when they are in a relaxed state.

8. Apparatus according to claim 3, characterized in that the second terminal coil of the calibration sleeve (4) is axially secured vis-à-vis the attachment flange (1).

9. Apparatus according to claim 3, characterized in that the worm shaft (8) can be motor-driven.

10. Apparatus according to claim 9, characterized in that the drive can be regulated in relation to a diameter signal recorded on the finished pipe by means of a sensor.

## Revendications

1. Dispositif pour calibrer le diamètre extérieur d'un tuyau extrudé en continu, comportant un manchon de calibrage (4), enroulé en spirale, qui est disposé entre une bride de fixation (1) et une bride à rainure (15), en particulier dans la zone d'entrée d'un dispositif de refroidissement, et dont les spires d'extrémité sont aptes à être tordues l'une par rapport à l'autre dans le sens circonférentiel, caractérisé en ce que les spires du manchon de calibrage (4) sont conçues comme une bande à section transversale rectangulaire et en ce qu'au moins un rail de support (17) parallèle au manchon de calibrage (4) empêche les spires de la bande d'être déviées latéralement.

2. Dispositif selon la revendication 1, caractérisé en ce que l'écartement entre les spires d'extrémité est réglable.

3. Dispositif selon la revendication 1, caractérisé en ce que la première spire d'extrémité de la bande est montée, fixe en torsion, dans la bride à rainure (15), et en ce que la seconde spire d'extrémité de la bande est reliée à une roue à vis sans fin (7) dans laquelle un arbre à vis sans fin (8) monté sur la bride de fixation (1) s'engrène pour tordre la seconde spire d'extrémité par rapport à la bride de fixation (1).

4. Dispositif selon la revendication 1, caractérisé en ce que quatre rails de support (17) sont répartis sur la circonférence du manchon de calibrage (4).

5. Dispositif selon la revendication 1 ou 4, caractérisé en ce que les rails de support (17) sont flexibles dans le sens circonférentiel du tube de calibrage (4).

6. Dispositif selon la revendication 1, 4 ou 5, caractérisé en ce que les rails de support (17) sont vissés aux spires individuelles du manchon de calibrage (4) grâce à des liaisons par vis (18).

7. Dispositif selon l'une au moins des revendications précédentes, caractérisé en ce que les spires individuelles du manchon de calibrage (4) présentent un écartement mutuel, en position détendue.

8. Dispositif selon la revendication 3, caractérisé en ce que la seconde spire d'extrémité du manchon de calibrage (4) est immobilisée axialement par rapport à la bride de fixation (1).

9. Dispositif selon la revendication 3, caractérisé en ce que l'arbre à vis sans fin (8) est apte à être entraîné par un moteur.

10. Dispositif selon la revendication 9, caractérisé en ce que l'entraînement est réglable en fonction d'un signal de diamètre détecté à l'aide d'un capteur au niveau du tube fini.
